# EUROPÄISCHE PATENTSCHRIFT

(11) **EP 1 451 231 B1**
(45) Veröffentlichungstag und Bekanntmachung des Hinweises auf die Patenterteilung: **31.12.2008**
(21) Anmeldenummer: 02792776.3
(22) Anmeldetag: 19.11.2002
(51) Int. Cl.: C08F 26/02, C08F 2/10, C08F 2/44, C08F 8/12, C08F 283/06, D21H 21/10, D21H 21/18

(54) **Wässrige Dispersionen von Wasserlöslichen Polymerisaten von N-Vinylcarbonsäureamiden, Verfahren zu ihrer Herstellung und ihre Verwendung**
Aqueous dispersions of water-soluble polymers of N-vinyl carboxylic acid amides, method for the production thereof and their use
Dispersions aqueuses de polymères hydrosolubles d'amides d'acide N-vinyle carboxylique, procédé permettant de les produire et leur utilisation

(30) Priorität: 24.11.2001 DE 10157675
(43) Veröffentlichungstag der Anmeldung: 01.09.2004
(73) Patentinhaber: BASF SE, 67056 Ludwigshafen (DE)
(72) Erfinder: LEDUC, Marc, 67346 Speyer (DE); FRENZEL, Stefan, 68161 Mannheim (DE); MAHR, Norbert, 67117 Limburgerhof (DE)
(86) Internationale Anmeldenummer: PCT/EP2002/012934
(87) Internationale Veröffentlichungsnummer: WO 2003/046024

(56) Entgegenhaltungen:
- EP-A- 0 859 015
- EP-A- 1 136 070
- WO-A-00/27893
- DE-A- 19 652 040

## Beschreibung

Die Erfindung betrifft wäßrige Dispersionen von wasserlöslichen Polymerisaten von N-Vinylcarbonsäureamiden, Verfahren zur Herstellung der Dispersionen in Gegenwart von Stabilisatoren und die Verwendung der Dispersionen als Entwässerungs-, Flockungs- und Retentionsmittel, als Nass- und Trockenfestigkeitsmittel und als Fixiermittel bei der Herstellung von Papier.

Aus der EP-B-0 814 099 ist ein Verfahren zur Herstellung einer wässrigen Dispersion eines wasserlöslichen kationischen Polymeren bekannt, wobei man eine wäßrige, Neutralsalze enthaltende Dispersion eines Vinylformamideinheiten enthaltenden Polymeren mit einer Säure in wässrigem Medium unter Zusatz von Nitraten hydrolysiert. Die so hergestellten wässrigen Dispersionen von Vinylamineinheiten enthaltenden Polymerisaten haben einen hohen Neutralsalzgehalt.

Aus der WO-A-97/30094 ist ein Verfahren zur Herstellung von Dispersionen wasserlöslicher kationischer Vinylpolymerer bekannt. Die Polymerisation der wasserlöslichen Monomeren erfolgt in wässrigen Salzlösungen in Gegenwart von Stabilisatoren, die aus einem wasserlöslichen Pfropfcopolymer bestehen, das als Pfropfgrundlage Polyethylenoxid und als Seitenketten aufgepfropfte kationische Vinylmonomere enthält.

Aus der WO-A-98/54234 sind wäßrige Dispersionen von wasserlöslichen N-Vinylcarbonsäureamiden bekannt. Die Dispersionen werden durch Polymerisieren von N-Vinylcarbonsäureamiden in wässrigem Medium in Gegenwart wasserlöslicher Salze und wasserlöslicher polymerer Stabilisatoren hergestellt. Als polymere Stabilisatoren werden beispielsweise Polyvinylalkohol und partiell hydrolysierte Polyvinylacetate eingesetzt.

Die deutsche Offenlegungsschrift DE-A 196 52 040 offenbart ein Verfahren zur Herstellung von wässrigen Lösungen oder Dispersionen durch Poymerisieren eines N-Vinylcarbonsäureamids in einem wässrigen Medium in Gegenwart eines Polyalkylenglykols, das ausgewählt ist aus Polyethylenglykol, Polypropylenglykol und einem Copolymeren von Ethylenglykol und Propylenglykol, und anschließender Hydrolyse des Polymeren mit einer Säure oder Base.

Gegenstand der WO-A-00/27893 sind wäßrige Dispersionen von wasserlöslichen Polymerisaten von N-Vinylcarbonsäureamiden, Verfahren zu ihrer Herstellung und die Verwendung als Entwässerungs-, Flockungs- und Retentionsmittel sowie als Nass- und Trockenfestigkeitsmittel und als Fixiermittel bei der Herstellung von Papier. Zur Stabilisierung der Dispersionen verwendet man polymere Dispergiermittel, z.B. Polyethylenglykol, Polypropylenglykol, Polyvinylacetat, Polyvinylalkohol, Polyvinylpyridin, Polyvinylimidazol und Polydiallyldimethylammoniumchlorid.

Der Erfindung liegt die Aufgabe zugrunde, weitere Dispersionen von wasserlöslichen Polymerisaten von N-Vinylcarbonsäureamiden zur Verfügung zu stellen.

Die Aufgabe wird erfindungsgemäß gelöst mit wässrigen Dispersionen von wasserlöslichen Polymerisaten von N-Vinylcarbonsäureamiden, wenn die Dispersionen als Stabilisator wasserlösliche, vernetzte Pfropfpolymere enthalten, die durch radikalisch initiierte Polymerisation von Verbindungen mit mindestens zwei ethylenisch ungesättigten Doppelbindungen in Gegenwart von Polyalkylenglykolen erhältlich sind.

100 Gew.-Teile der Dispersionen enthalten beispielsweise (a) 5 bis 60 Gew.-Teile eines wasserlöslichen Polymerisats eines N-Vinylcarbonsäureamids und (b) 0,1 bis 30 Gew. -Teile mindestens eines vernetzten Pfropfpolymerisats. Die wasserlöslichen Polymerisate von N-Vinylcarbonsäureamiden basieren vorzugsweise auf Homo- und Copolymerisaten, die Einheiten der Formel 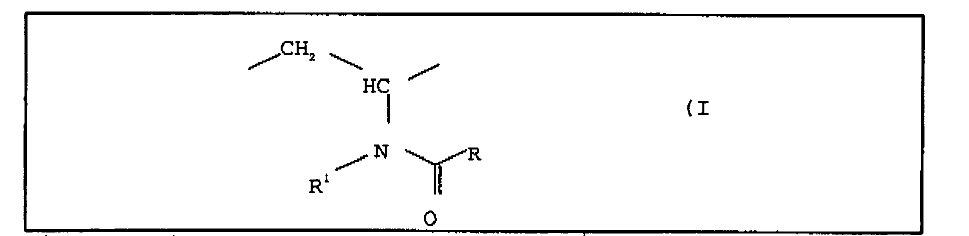 einpolymerisiert enthalten, in der R, R¹ = H oder CH₃ bedeuten. Die Polymeren werden durch Homo- oder Copolymerisation von z.B. N-Vinylformamid, N-Vinylacetamid, N-Vinyl-N-methylacetamid oder N-Vinyl-N-methylformamid hergestellt. Von den N-Vinylcarbonsäureamiden wird N-Vinylformamid bevorzugt eingesetzt.

Die wasserlöslichen N-Vinylcarbonsäureamid-Einheiten enthaltenden Polymerisate können gegebenenfalls 1 bis 80, vorzugsweise 5 bis 30 Gew.-% an weiteren Monomeren copolymerisiert enthalten. Solche Monomere sind beispielsweise monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure und Itaconsäure. Aus dieser Gruppe von Monomeren verwendet man vorzugsweise Acrylsäure, Methacrylsäure, Maleinsäure oder Mischungen der genannten Carbonsäuren. Die monoethylenisch ungesättigten Carbonsäuren werden entweder in Form der freien Säuren oder in Form ihrer Alkalimetall-, Erdalkalimetall- oder Ammoniumsalze bei der Copolymerisation eingesetzt. Zur Neutralisation der freien Carbonsäuren verwendet man vorzugsweise Natronlauge, Kalilauge, Soda, Pottasche, Natriumhydrogencarbonat, Magnesiumoxid, Calciumhydroxid, Calciumoxid, gasförmiges oder wäßriges Ammoniak, Triethylamin, Ethanolamin, Diethanolamin, Triethanolamin, Morpholin, Diethylentriamin oder Tetraethylenpentamin.

Weitere geeignete Comonomere sind beispielsweise die Ester, Amide und Nitrile der obenangegebenen Carbonsäuren, z.B. Acrylsäuremethylester, Acrylsäureethylester, Methacrylsäuremethylester, Methacrylsäurethylester, Hydroethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäu-remonoethylester, Maleinsäurediethylester, 2-Ethylhexylacrylat, 2-Ethylhexylmethacrylat, Acrylamid, Methacrylamid, N-Dimethylacrylamid, N-tert.-Butylacrylamid, Acrylnitril, Methacrylnitril, Dimethylaminoethylacrylat, Diethylaminoethylacrylat, Diethylaminoethylmethacrylat sowie die Salze der zuletzt genannten basischen Monomeren mit Carbonsäuren oder Mineralsäuren sowie die quaternierten Produkte der basischen (Meth)acrylate.

Außerdem eignen sich als andere copolymerisierbare Monomere Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende Monomere wie Vinylphosphonsäure, Allylphosphonsäure und Acrylamidomethanpropanphosphonsäure. Die Säuregruppen enthaltenden Monomeren können in Form der freien Säuregruppen sowie in partiell oder in vollständig mit Basen neutralisierter Form bei der Polymerisation eingesetzt werden.

Weitere geeignete copolymerisierbare Verbindungen sind N-Vinylpyrrolidon, N-Vinylcaprolactam, N-Vinylimidazol, N-Vinyl-2-methylimidazol, N-Vinyl-4-methylimidazol, Diallylammoniumchlorid, Vinylacetat, Vinylpropionat und Styrol. Es ist selbstverständlich auch möglich, Mischungen der genannten Monomeren einzusetzen. Sofern die genannten Monomeren bei alleiniger Polymerisation keine wasserlöslichen Polymerisate ergeben, enthalten die N-Vinylcarbonsäureamid-Einheiten enthaltenden Polymerisate diese Comonomeren nur in solchen Mengen einpolymerisiert, daß die Copolymerisate noch wasserlöslich sind. Im Gegensatz zu Wasser-in-Öl-Polymeremulsionen sind für die erfindungsgemäßen wässrigen Dispersionen keine organischen Lösemittel erforderlich. Wie aus dem eingangs angegebenen Stand der Technik hervorgeht, sind konzentrierte Lösungen anorganischer Salze ein übliches Mittel, um wässrige Dispersionen von wasserlöslichen Polymerisaten herzustellen. Dadurch enthalten die bekannten Dispersionen eine sehr hohe Salzfracht. Die erfindungsgemäßen wässrigen Dispersionen von wasserlöslichen Polymerisaten sind demgegenüber praktisch salzfrei. Die wässrigen Dispersionen wasserlöslicher Polymerisate von N-Vinylformamid, N-Vinyl-N-methylformamid, N-Vinyl-N-methylacetamid und/oder N-Vinylacetamid besitzen vorzugsweise einen hohen Polymerisatgehalt und enthalten vorzugsweise Polymerisate mit hohen Molmassen bei gleichzeitig geringer Viskosität. Die Molmassen M_{w} der N-Vinylcarbonsäureamid-Einheiten enthaltenden Polymerisate betragen beispielsweise 5 · 10⁴ bis 1 · 10⁷, vorzugsweise 2 · 10⁵ bis 1 · 10⁶.

Die wässrigen Dispersionen enthalten als Stabilisator vernetzte Pfropfpolymerisate, die aus einem Polyalkylenglykol-Backbone und darauf gepfropften Polymeren aus einer mindestens zwei ethylenisch ungesättigte Doppelbindungen enthaltenden Verbindung aufgebaut sind. Die vernetzten Pfropfpolymeren wirken im wässrigen Polymerisationsmedium beispielsweise als Stabilisator und/oder als Fällungsmittel für die entstehenden Polymerteilchen. Sie werden im folgenden Text als Stabilisatoren bezeichnet. Solche Stabilisatoren sind beispielsweise durch Polymerisation von 0,01 bis 10 Gew.-Teilen einer mindestens zwei ethylenisch ungesättigte Doppelbindungen enthaltenden Verbindung in Gegenwart von 100 Gew.-Teilen mindestens eines Polyalkylenglykols erhältlich. Die Pfropfpolymerisation kann gegebenenfalls auch in Gegenwart von monoethylenisch ungesättigten Comonomeren durchgeführt werden. So kann man beispielsweise (i) 0,01 bis 10 Gew.-Teile einer mindestens zwei ethylenisch ungesättigte Doppelbindungen enthaltenden Verbindung und (ii) 0 bis 90 Gew.-Teile mindestens eines monoethylenisch ungesättigten Monomeren in Gegenwart von 100 Gew.-Teilen mindestens eines Polyalkylenglykols polymerisieren, um die Stabilisatoren herzustellen.

Unter Polyalkylenglykolen sollen Verbindungen verstanden werden, die ein mittleres Molekulargewicht (Zahlenmittel) von mindestens 300 haben und die beispielsweise mit Hilfe der folgenden Formel beschrieben werden können: 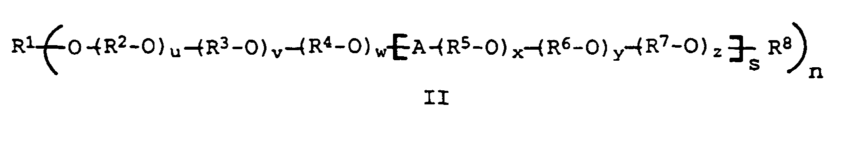 in der die Variablen unabhängig voneinander folgende Bedeutung haben:
- R¹: Wasserstoff, NH₂, C₁-C₂₄-Alkyl, R⁹-C(=O)-, R⁹-NH-C(=O)-, Polyalkoholrest;
- R⁸: Wasserstoff, NH₂, C₁-C₂₄-Alkyl, R⁹-C(=O)-, R⁹-NH-C(=O)-;
- R² bis R⁷: -(CH₂)₂-, -(CH₂)₃-, -(CH₂)₄-, -CH₂-CH(CH₃)-, -CH₂-CH(CH₂-CH₃)-, -CH₂-CHOR¹⁰-CH₂-;
- R⁹: C₁-C₂₄-Alkyl;
- R¹⁰: Wasserstoff, C₁-C₂₄-Alkyl, R⁹-C(=O)-;
- A: -C(=O)-O-, -C(=O)-B-C(=O)-O-,
-C(=O)-NH-B-NH-C(=O)-O-;
- B: -(CH₂)ₜ-, Arylen, gegebenenfalls substituiert;
- n: 1 bis 8;
- s: 0 bis 500;
- t: 1 bis 12;
- u: 1 bis 5000;
- v: 0 bis 5000;
- w: 0 bis 5000;
- x: 1 bis 5000;
- y: 0 bis 5000;
- z: 0 bis 5000.

Solche Verbindungen sind aus dem Stand der Technik bekannt, vgl. WO-A-00/18375. Als Pfropfgrundlage werden generell Polyalkylenglykole der allgemeinen Formel II, ausgewählt aus der Gruppe bestehend aus Polyalkylenoxiden auf Basis von Ethylenoxid, Propylenoxid und Butylenoxid sowie Polytetrahydrofuran verwendet. Je nach Art der Monomerbausteine ergeben sich Polymere mit folgenden Struktureinheiten.
-(CH₂)₂-O-, -(CH₂)₃-O-, -(CH₂)₄-O-, -CH₂-CH(CH₃)-O-,
-CH₂-CH(CH₂-CH₃)-O-, -CH₂-CHOR¹⁰-CH₂-O-;

Dabei kann es sich sowohl um Homopolymere als auch um Copolymere handeln, wobei die Copolymere statistisch verteilt sein können oder als sogenannte Blockpolymere vorliegen.

Die endständigen primären Hydroxylgruppen der, auf Basis von Alkylenoxiden hergestellten Polyalkylenglykole können sowohl frei vorliegen als auch ein- oder beidseitig mit Alkoholen einer Kettenlänge C₁-C₂₄ bzw. mit Carbonsäuren einer Kettenlänge C₁-C₂₄ verethert bzw. verestert sein. Sie können jedoch auch durch reduktive Aminierung mit Wasserstoff-Ammoniak-Gemischen unter Druck gegen primäre Aminogruppen ausgetauscht oder durch Cyanethylierung mit Acrylnitril und Hydrieren in Aminopropylendgruppen umgewandelt sein.

Als Alkylreste für R¹ und R⁸ bis R¹⁰ seien verzweigte oder unverzweigte C₁-C₂₄-Alkylketten, bevorzugt Methyl, Ethyl, n-Propyl, 1-Methylethyl, n-Butyl, 1-Methylpropyl-, 2-Methylpropyl, 1,1-Dimethylethyl, n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Ethylhexyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder n-Eicosyl genannt.

Als bevorzugte Vertreter der oben genannten Alkylreste seien verzweigte oder unverzweigte C₁-C₁₂-, besonders bevorzugt C₁-C₆-Alkylketten genannt.

Das Molekulargewicht der Polyalkylenglykole liegt im Bereich kleiner 500000 (nach Zahlenmittel), bevorzugt im Bereich von 300 bis 100000, besonders bevorzugt im Bereich von 500 bis 20000, ganz besonders bevorzugt im Bereich von 800 bis 15000 (jeweils Zahlenmittel des Molekulargewichts).

Vorteilhafterweise verwendet man Homopolymerisate des Ethylenoxids oder Copolymerisate, mit einem Anteil an Ethylenoxideinheiten von 40 bis 99 Gew.-%. Für die bevorzugt einzusetzenden Ethylenoxidpolymerisate beträgt somit der Anteil an einpolymerisiertem Ethylenoxid 40 bis 100 Mol-%. Als Comonomer für diese Copolymerisate kommen Propylenoxid, Butylenoxid und/oder Isobutylenoxid in Betracht. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Der Ethylenoxidanteil der Copolymerisate beträgt vorzugsweise 40 bis 99 Mol.-%, der Propylenoxidanteil 1 bis 60 Mol.-% und der Anteil an Butylenoxid in den Copolymerisaten 1 bis 30 Mol.-%. Neben geradkettigen können auch verzweigte Homo- oder Copolymerisate als Pfropfgrundlage verwendet werden.

Auch verzweigte Polymerisate sind ebenfalls als Pfropfgrundlage geeignet. Sie können hergestellt werden, indem man beispielsweise an niedrigmolekularen Polyalkoholresten (= R¹ in der allgemeinen Formel I, wie z.B. Pentaerythrit, Glycerin oder an Zuckern bzw. Zuckeralkoholen wie Saccharose, D-Sorbit und D-Mannit) Ethylenoxid und gegebenenfalls noch Propylenoxid und/oder Butylenoxide anlagert.

Dabei können Polymerisate gebildet werden, bei denen mindestens eine, bevorzugt eine bis acht, besonders bevorzugt eine bis fünf der in den Polyalkoholen vorhandenen Hydroxylgruppen in Form einer Etherbindung mit dem folgenden Polyetherrest P, gemäß Formel II 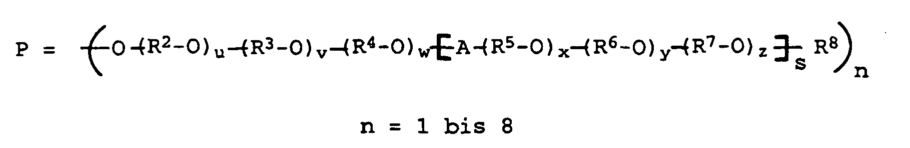 verknüpft sein können.

Die Alkylenoxid-Einheiten können im Polymerisat statistisch verteilt sein oder in Form von Blöcken vorliegen.

Es ist aber auch möglich, Polyester von Polyalkylenoxiden und aliphatischen C₁-C₁₂-, bevorzugt C₁-C₆-Dicarbonsäuren oder aromatischen Dicarbonsäuren, z.B. Oxalsäure, Bernsteinsäure, Adipinsäure oder Terephthalsäure mit Molmassen von 1500 bis 25000, beschrieben in EP-A-0 743 962, als Pfropfgrundlage zu verwenden.

Es ist weiterhin möglich, durch Phosgenierung hergestellte Polycarbonate von Polyalkylenoxiden oder auch Polyurethane von Polyalkylenoxiden und aliphatischen C₁-C₁₂-, bevorzugt C₁-C₆-Diisocyanaten oder aromatischen Diisocyanaten, z.B. Hexamethylendiisocyanat oder Phenylendiisocyanat als Pfropfgrundlage zu verwenden. Die o.g. Polyester, Polycarbonate oder Polyurethane können bis zu 500, bevorzugt bis zu 100 Alkylenoxideinheiten enthalten, wobei die Alkylenoxideinheiten sowohl aus Homopolymeren als auch aus Copolymeren unterschiedlicher Alkylenoxide bestehen können.

Geeignete Verbindungen mit mindestens zwei ethylenisch ungesättigten Doppelbindungen, die auch als Vernetzer bezeichnet werden, sind zum Beispiel Acrylester, Methacrylester, Allylether oder Vinylether von mindestens zweiwertigen Alkoholen. Die OH-Gruppen der zugrundeliegenden Alkohole können dabei ganz /z.B. Divinylether von Butandiol-1,4 oder teilweise verethert oder verestert sein; die Vernetzer enthalten aber mindestens zwei ethylenisch ungesättigte Gruppen.

Beispiele für die zugrundeliegenden Alkohole sind zweiwertige Alkohole wie 1,2-Ethandiol, 1,2-Propandiol, 1,3-Butandiol, 2,3-Butandiol, 1,4-Butandiol, But-2-en-1,4-diol, 1,2-Pentandiol, 1,5-Pentandiol, 1,2-Hexandiol, 1,5-Hexandiol, 1,10-Decandiol, 1,2-Dodecandiol, 1,12-Dodecandiol, Neopentylglykol, 3-Methyl-pentan-1,5-diol, 2,5-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäureneopentylglykolmonoester, 2,2-Bis(4-hydroxyphenyl)propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thio-pentan-1,5-diol, sowie Polyethylenglykole, Polypropylenglykole und Polytetrahydrofurane mit Molekulargewichten von jeweils 200 bis 10 000. Außer den Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃-C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch die einwertigen, ungesättigten Alkohole mit mehrwertigen Carbonsäuren verestern, beispielsweise Malonsäure, Weinsäure, Trimellitsäure, Phthalsäure, Terephthalsäure, Citronensäure oder Bernsteinsäure.

Weitere geeignete Vernetzer sind Ester ungesättigter Carbonsäuren mit den oben beschriebenen mehrwertigen Alkoholen, beispielsweise der Ölsäure, Crotonsäure, Zimtsäure oder 10-Undecensäure.

Als Vernetzer eignen sich außerdem geradkettige oder verzweigte, lineare oder cyclische, aliphatische oder aromatische Kohlenwasserstoffe, die über mindestens zwei Doppelbindungen verfügen, z.B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 bis 20000.

Als Vernetzer sind ferner geeignet die Acrylsäureamide, Methacrylsäureamide und N-Allylamine von mindestens zweiwertigen Aminen. Solche Amine sind zum Beispiel 1,2-Diaminomethan, 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren wie Acrylsäuren, Methacrylsäure, Itaconsäure, Maleinsäure, oder mindestens zweiwertigen Carbonsäuren, wie sie oben beschrieben wurden. Ferner sind Triallylamin und Triallylmonoalkylammoniumsalze, z.B. Triallylmethylammoniumchlorid oder -methylsulfat, als Vernetzer geeignet.

Geeignet sind auch N-Vinyl-Verbindungen von Harnstoffderivaten, mindestens zweiwertigen Amiden, Cyanuraten oder Urethanen, beispielsweise von Harnstoff, Ethylenharnstoff, Propylenharnstoff oder Weinsäurediamid, z.B. N,N'-Divinylethylenharnstoff oder N,N'-Divinylpropylenharnstoff.

Weitere geeignete Vernetzer sind Divinyldioxan, Tetraallylsilan oder Tetravinylsilan. Vorzugsweise werden solche Vernetzer eingesetzt, die in der Monomermischung löslich sind. Besonders bevorzugt eingesetzte Vernetzer sind beispielsweise Pentaerythrittriallylether, Methylenbisacrylamid, Triallylamin und Triallylalkylammoniumsalze, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder mehrwertige Alkoholen, die mit Ethylenoxid und/oder Propylenoxid umgesetzt worden sind, z.B. Acrylsäureester von Glykol, Butandiol, Trimethylolpropan oder Glycerin oder Acrylsäureester von mit Ethylenoxid umgesetztem Glykol, Butandiol, Trimethylolpropan oder Glycerin. Ganz besonders bevorzugt als Vernetzer sind Pentaerythrittriallylether, Methylenbisacrylamid und *N*,*N'*-Divinylethylenharnstoff.

Für die Herstellung der Stabilisatoren polymerisiert man die Vernetzer entweder allein oder zusammen mit monoethylenisch ungesättigten Monomeren in Gegenwart von Polyalkylenglykolen. Als monoethylenisch ungesättigte Verbindungen kann man beispielsweise sämtliche Comonomere einsetzen, die oben als Comonomere für N-Vinylcarbonsäureamide genannt sind, z.B. Acrylsäure, Acrylsäureester von einwertigen Alkoholen, Acrylamid, Acrylnitril, N-Vinylformamid, Vinylacetat und/oder Vinylpropionat. Bezogen auf 100 Gew.-Teile eines Polyalkylenglykols setzt man beispielsweise bis zu 90, vorzugsweise bis zu 50 und insbesondere bis zu 25 Gew.-Teile mindestens eines Comonomeren ein.

Gegenstand der Erfindung ist außerdem ein Verfahren zur Herstellung von wässrigen Dispersionen von wasserlöslichen Polymerisaten von N-Vinylcarbonsäureamiden durch radikalische Polymerisation von N-Vinylcarbonsäureamiden in wässrigem Medium in Gegenwart von Stabilisatoren und/oder Fällungsmittel, wobei man als Stabilisator wasserlösliche, vernetzte Pfropfpolymere einsetzt, die durch radikalisch initiierte Polymerisation von Verbindungen mit mindestens zwei ethylenisch ungesättigten Doppelbindungen in Gegenwart von Polyalkylenglykolen erhältlich sind. Bei diesem Verfahren wird beispielsweise N-Vinylformamid gegebenenfalls zusammen mit anderen monoethylenisch ungesättigten Monomeren in Gegenwart von Stabilisatoren polymerisiert, die durch Pfropfpolymerisation von (i) 0,01 bis 10 Gew.-Teilen einer mindestens zwei ethylenisch ungesättigte Doppelbindungen enthaltenden Verbindung und (ii) 0 bis 90 Gew.-Teilen mindestens eines monoethylenisch ungesättigten Monomeren in Gegenwart von 100 Gew.-Teilen mindestens eines Polyalkylenglykols erhältlich sind.

Bevorzugt werden als Stabilisator Pfropfpolymerisate einsetzt, die durch Polymerisieren von N,N'-Divinylethylenharnstoff, Pentaerythrittriallylether, Methylenbisacrylamid und/oder mindestens zweifach mit Acrylsäure oder Methacrylsäure veresterten mehrwertigen Alkoholen in Gegenwart von Polyethylenglykol, Polypropylenglykol und/oder Blockcopolymerisaten aus Ethylenoxid und Propylenoxid erhältlich sind.

Die wässrigen Dispersionen enthalten z.B. auf 100 Gew.-Teile Wasser 1 bis 50, vorzugsweise 5 bis 40 Gew.-Teile mindestens eines Stabilisators. Um von N-Vinylcarbonsäureamiden herzustellen, polymerisiert man in einer bevorzugten Auführungsform
- 5 bis 80 Gew.-Teile N-Vinylformamid und/oder N-Vinylacetamid gegebenenfalls zusammen mit anderen monoethylenisch ungesättigten Monomeren, die damit wasserlösliche Polymerisate bilden, und
- 1 bis 50 Gew.-Teile mindestens eines polymeren Stabilisators,
in 100 Gew.-Teilen Wasser bei Temperaturen von 30 bis 95°C in Gegenwart von 0,001 bis 5,0 Gew.-%, bezogen auf die eingesetzten Monomeren, an Initiatoren.

In der besonders bevorzugten Ausführungsform des Verfahrens polymerisiert man
- 10 bis 50 Gew.-Teile N-Vinylformamid gegebenenfalls zusammen mit anderen monoethylenisch ungesättigten Monomeren, die damit wasserlösliche Polymerisate bilden, und
- 5 bis 40 Gew.-Teile mindestens eines polymeren Stabilisators
in 100 Gew.-Teilen Wasser bei Temperaturen von 40 bis 70°C mit 0,5 bis 2,0 Gew.-%, bezogen auf die bei der Polymerisation eingesetzten Monomeren, an Azoverbindungen, die unter den Polymerisationsbedingungen in Radikale zerfallen.

Die Monomeren werden erfindungsgemäß radikalisch polymerisiert, d.h. man verwendet Polymerisationsinitiatoren, die unter den Polymerisationsbedingungen Radikale bilden. Geeignete Verbindungen dieser Art sind beispielsweise Wasserstoffperoxid, Peroxide, Hydroperoxide, Redoxkatalysatoren und nicht oxidierend wirkende Initiatoren wie Azoverbindungen, die unter den Polymerisationsbedingungen in Radikale zerfallen. Geeignete Azoverbindungen sind beispielsweise 2,2'-Azo-bis(2-amidixnopropan)dihydrochlorid, 2,2'-Azo-bis(*N*,*N'*-dimethylenisobutyramidin)dihydrochlorid, 2,2'-Azo-bis(2,4-dimethylvaleronitril), 2,2'-Azo-bis[2-methyl-N-(2-hydroxyethyl)-propionamid] oder 2,2'-Azo-bis-isobutyronitril. Es ist selbstverständlich auch möglich, Mischungen verschiedener Initiatoren einzusetzen.

Falls Dispersionen von Polymerisaten mit niedrigen Molekulargewichten gewünscht werden, kann man beispielsweise die Initiatormengen, die bei der Polymerisation üblicherweise eingesetzt werden, erhöhen, so daß man auch Initiatormengen einsetzen kann, die außerhalb des oben angegebenen Bereichs für die Initiatormengen liegen. Wäßrige Dispersionen von niedrigmolekularen Homo- und Copolymerisaten der in Betracht kommenden Vinylcarbonsäureamide können auch dadurch erhalten werden, daß man die Polymerisation in Gegenwart von Polymerisationsreglern durchführt und gegebenenfalls gleichzeitig höhere Menge als üblicherweise erforderlich an Initiatoren einsetzt. Geeignete Polymerisationsregler sind beispielsweise Schwefel in gebundener Form enthaltende Verbindungen wie Dodecylmercaptan, Thioglykolsäure, Thioessigsäure und Mercaptoalkohole wie Mercaptoethanol, Mercaptopropanole und Mercaptobutanole. Daneben kann man als Polymerisationsregler auch Ameisensäure, Isopropanol und Hydrazin in Form von Salzen mit starken Säuren verwenden.

Die Molekulargewichte der in der dispergierten Form vorliegenden Polymerisate können auch mit Hilfe der K-Werte nach Fikentscher charakterisiert werden. Die K-Werte betragen bis zu 300 und liegen vorzugsweise in dem Bereich von 130 bis 180. Aus Lichtstreuexperimenten folgt, daß ein K-Wert von 250 einem mittleren Molekulargewicht der Polymerisate von etwa 7 000 000 Dalton entspricht.

Vinylcarbonsäureamideinheiten enthaltende Polymere können zu Vinylamineinheiten enthaltenden Polymerisaten hydrolysiert werden. So entstehen beispielsweise durch Abspaltung von Formylgruppen aus N-Vinylformamideinheiten enthaltenden Polymerisaten und durch Abspaltung der Gruppe CH₃-CO- aus N-Vinylacetamideinheiten enthaltenden Polymerisaten entstehen jeweils Vinylamin-Einheiten enthaltende Polymerisate. Die Abspaltung kann partiell oder vollständig durchgeführt werden. Sofern die Hydrolyse in Gegenwart von Säuren vorgenommen wird, liegen die Vinylamin-Einheiten der Polymeren als Ammoniumsalze vor. Die Hydrolyse kann jedoch auch mit Hilfe von Basen vorgenommen werden, z.B. von Metallhydroxiden, insbesondere von Alkalimetall- und Erdalkalimetallhydroxiden. Vorzugsweise verwendet man Natriumhydroxid oder Kaliumhydroxid. In besonderen Fällen kann die Hydrolyse auch mit Hilfe von Ammoniak oder Aminen durchgeführt werden. Bei der Hydrolyse in Gegenwart von Basen liegen die Vinylamin-Einheiten in Form der freien Basen vor.

Als Hydrolysemittel eignen sich vorzugsweise Mineralsäuren, wie Halogenwasserstoffe, die gasförmig oder als wäßrige Lösung eingesetzt werden können. Vorzugsweise verwendet man konzentrierte Salzsäure, Schwefelsäure, Salpetersäure oder Phosphorsäure sowie organische Säuren, wie C₁- bis C₅-Carbonsäuren, sowie aliphatische oder aromatische Sulfonsäuren. Beispielsweise benötigt man pro Formylgruppenäquivalent in den N-Vinylformamideinheiten einpolymerisiert enthaltenden Polymeren 0,05 bis 2, insbesondere 1 bis 1,5 Moläquivalente einer Säure. Die Hydrolyse der N-Vinylformamid-Einheiten verläuft bedeutend schneller als die der N-Vinylacetamid-Einheiten aufweisenden Polymerisate. Sofern man Copolymerisate der in Betracht kommenden Vinylcarbonsäureamide mit anderen Comonomeren der Hydrolyse unterwirft, so können auch die im Copolymerisat enthaltenen Comonomer-Einheiten chemisch verändert werden. So entstehen beispielsweise aus Vinylacetat-Einheiten Vinylalkohol-Einheiten. Aus Acrylsäuremethylester-Einheiten entstehen bei der Hydrolyse Acrylsäure-Einheiten und aus AcrylnitrilEinheiten werden Acrylamid- bzw. Acrylsäure-Einheiten gebildet. Die Hydrolyse der N-Vinylformamid- und/oder Vinylacetamid-Einheiten der Polymerisate (A) kann zu 5 bis 100, vorzugsweise 10 bis 40 % durchgeführt werden. Obwohl die wässrigen Dispersionen von wasserlöslichen N-Vinylcarbonsäureamiden beim Verdünnen mit Wasser in Lösung gehen, wird die Dispersion bei der Hydrolyse überraschenderweise nicht zerstört. Der Teilchendurchmesser der hydrolysierten Teilchen beträgt vor bzw. nach der Hydrolyse z.B. 0,1 bis 50 µm.

Die so erhältlichen wässrigen Dispersionen von N-Vinylcarbonsäureamiden bilden beim Verdünnen mit Wasser klare wäßrige Polymerlösungen. Die Viskosität der Dispersionen beträgt beispielsweise 300 bis 50 000 mPas, vorzugsweise 500 bis 20 000 mPas (bestimmt in einem Brookfield-Viskosimeter bei 20°C, Spindel Nr. 4 und 20 UpM). Die mittlere Teilchengröße der Dispersionen, die Polymerisate mit Einheiten von N-Vinylformamid, N-Vinylacetamid und/oder N-Methyl-N-vinylacetamid enthalten, haben meistens eine mittlere Teilchengröße von 0,1 bis 50 µm.

Die oben beschriebenen Dispersionen, d.h. die nicht hydrolisierten als auch die hydrolysierten wässrigen Dispersionen von wasserlöslichen N-Vinylcarbonsäureamiden werden als Entwässerungs-, Flockungs- und Retentionsmittel sowie als Nass- und Trockenfestigkeitsmittel und als Fixiermittel bei der Herstellung von Papier verwendet. Die kationischen Polymeren können außerdem als Flockungsmittel für Abwässer bei der Klärschlammentwässerung, als Flockungsmittel bei der Erzaufbereitung und der tertiären Erdölförderung oder als Dispergiermittel, z.B. für anorganische und organische Pigmente, Farbstoffe, Zement oder Pflanzenschutzmittel verwendet werden. Die nicht hydrolysierten wie auch die hydrolysierten wässrigen Dispersionen sind außerdem als Verfestigungsmittel für Papier, als Fixiermittel für lösliche und unlöslichen Störstoffe bei der Papierherstellung und als Mittel für die Papierstreicherei einsetzbar. Sie können ferner als Beschichtungsmaterial für Düngemittel und Pflanzenschutzmittel und als Fußbodenpflegemittel eingesetzt werden. Auch in der Kosmetik, z.B. für haarkosmetische Zubereitungen, wie beispielsweise Conditioner, Haarfestiger oder als Conditioner für Hautpflegemittel sowie als Verdicker für Kosmetikformulierungen ferner als Bestandteil von kosmetischen Zubereitungen für die Mundpflege sind die genannten wässrigen hydrolysierten bzw. nicht hydrolysierten Polymerdispersionen einsetzbar.

Die K-Werte wurden nach H. Fikentscher, Cellulose-Chemie, Band 13, 58-64 und 71-74 (1932) in wässriger Lösung bei 25°C und Konzentrationen, die je nach K-Wert-Bereich zwischen 0,1 % und 5 Gew.-% liegen, bestimmt. Die Viskosität der Dispersionen wurde jeweils in einem Brookfield-Viskosimeter mit einer Spindel Nr. 4 bei 20 UpM und einer Temperatur von 20°C gemessen. Die Angaben in % sind Gewichtsprozent. Eine besondere Ausführungsart der Erfindung wird im Patentanspruch 4 angegeben. Beispiele

### Herstellung von Stabilisator A

In einer Stickstoffatmosphäre erhitzte man unter ständigem Durchmischen 464 g Polyethylenglykol (Molekulargewicht (Zahlenmittel) von 1500) auf eine Temperatur von 120°C. Dann fügte man 7.28 g N,N'-Divinylethylenharnstoff zu und erhitzte die Mischung auf 140°C. Nachdem diese Temperatur erreicht war, dosierte man innerhalb einer Stunde eine Lösung von 7 g tert.-Butylperoxid in 20 g Octan. Danach erhitzte man das Reaktionsgemisch eine weitere Stunde auf eine Temperatur von 140°C, kühlte es auf Raumtemperatur ab und verdünnte es durch Zusatz von 500 g Wasser. Man erhielt eine klare wäßrige Lösung mit einem Polymergehalt von 47,4 Gew.-%.

### Beispiel 1

316,5 g der 47,4 %-igen wässrigen Lösung des Stabilisators A, 2,5 g Natriumdihydrogenphosphat und 250 g N-Vinylformamid wurden in 429 g Wasser gelöst. Der pH-Wert der klaren wässrigen Lösung wurde durch Zugabe von 50 %-igen wässriger Natronlauge auf einen Wert von 6,75 eingestellt. Danach leitete man 10 Minuten Stickstoff durch die wäßrige Lösung, gab 1,25 g 2,2'-Azobis-(2-methyl-propionamidin)dihydrochlorid zu, erhitzte das Reaktionsgemisch unter einer Stickstoffatmosphäre auf eine Temperatur von 50°C und rührte es 7 Stunden bei der angegebenen Temperatur. Danach dosierte man 0,5 g 2,2'-(Azobis[2-(2-imidazolin-2-yl)propan]-dihydrochlorid, rührte das Gemisch noch 3 Stunden bei 50°C und kühlte es dann auf Raumtemperatur. Man erhielt eine stabile weiße Suspension mit einer Viskosität von 900 mPas (Brookfield-Viskosimeter, Sindel 4, 20 UpM). Der mittlere Teilchendurchmesser der dispergierten Polymeren betrug 10 µm. Das so hergestellte Polymer hatte einen K-Wert von 142.

### Vergleichsbeispiel 1

150g Polyethylenglykol (Molekulargewicht (Zahlenmittel) 1500), 2,5g Natriumdihydrogenphosphat und 250 g N-Vinylformamid wurden in 596 g Wasser gelöst. Der pH-Wert der klaren wässrigen Lösung wurde durch Zugabe von 50 %-iger wässriger Natronlauge auf einen Wert von 6,75 eingestellt. Nachdem man 10 Minuten Stickstoff durch die Mischung geleitet hatte, gab man 1,25 g 2,2'-Azo-bis-(2-methylpropionamidin)dihydrochlorid zu, erhitzte das Reaktionsgemisch unter einer Stickstoffatmosphäre auf eine Temperatur von 50°C und rührte es 7 Stunden bei dieser Temperatur. Danach dosierte man 0,5 g 2,2'-(Azobis[2-(2-imidazolin-2-yl)propan]-dihydrochlorid, rührte das Gemisch noch 3 Stunden bei 50°C und kühlte es dann auf Raumtemperatur. Bereits während der letzten 3 Stunden der Polymerisation wurde eine Agglomeration des Polymeren beobachtet. Beim Abkühlen auf Raumtemperatur erhielt man eine agglomerierte Polymermasse.

## Patentansprüche

1. Wässrige Dispersionen von wasserlöslichen Polymerisaten von N-Vinylcarbonsäureamiden, **dadurch gekennzeichnet, daß** sie als Stabilisator wasserlösliche, vernetzte Pfropfpolymere enthalten, die durch radikalisch initiierte Polymerisation von Verbindungen mit mindestens zwei ethylenisch ungesättigten Doppelbindungen in Gegenwart von Polyalkylenglykolen mit einem mittleren Molekulargewicht (Zahlenmittel) im Bereich von mindestens 300 bis kleiner 500.000 erhältlich sind.

2. Wässrige Dispersionen nach Anspruch 1, **dadurch gekennzeichnet, daß** 100 Gew.-Teile der Dispersionen (a) 5 bis 60 Gew. -Teile eines wasserlöslichen Polymerisats eines N-Vinylcarbonsäureamids und (b) 0,1 bis 30 Gew.-Teile mindestens eines vernetzten Pfropfpolymerisats enthalten.

3. Wäßrige Dispersionen nach Anspruch 1 oder 2, **dadurch gekennzeichnet, daß** die Polymerisate Einheiten von N-Vinylformamid, N-Vinylacetamid und/oder N-Methyl-N-vinylacetamid enthalten und eine mittlere Teilchengröße von 0,1 bis 50 µm haben.

4. Wässrige Dispersionen nach einem der Ansprüche 1 bis 3, **dadurch gekennzeichnet, daß** die Polymerisate ausgewählt sind aus der Gruppe der Homopolymerisate von N-Vinylformamid, der Copolymerisate von N-Vinylformamid mit anderen monoethylenisch ungesättigten Monomeren und der daraus durch Hydrolyse jeweils erhältlichen Vinylamineinheiten enthaltenden Polymeren.

5. Wässrige Dispersionen nach einem der Ansprüche 1 bis 4, **dadurch gekennzeichnet, daß** die Viskosität der Dispersionen 300 bis 50 000 mPas, vorzugsweise 500 bis 20 000 mPas (bestimmt in einem Brookfield-Viskosimeter bei 20 °C, Spindel Nr. 4 und 20 UpM) beträgt.

6. Wässrige Dispersionen nach einem der Ansprüche 1 bis 5, **dadurch gekennzeichnet, daß** die Dispersionen als Stabilisator wasserlösliche, vernetzte Pfropfpolymerisate enthalten, die durch Polymerisation von 0,01 bis 10 Gew. -Teilen einer mindestens zwei ethylenisch ungesättigte Doppelbindungen enthaltenden Verbindung in Gegenwart von 100 Gew.-Teilen mindestens eines Polyalkylenglykols erhältlich sind.

7. Wässrige Dispersion nach einem der Ansprüche 1 bis 6, **dadurch gekennzeichnet, daß** die Dispersionen als Stabilisator wasserlösliche,vernetzte Pfropfpolymerisate enthalten,die durch Polymerisation von (i) 0,01 bis 10 Gew.-Teilen einer mindestens zwei ethylenisch ungesättigte Doppelbindungen enthaltenden Verbindung und (ii) 0 bis 90 Gew.-Teilen mindestens eines monoethylenisch ungesättigten Monomeren in Gegenwart von 100 Gew.-Teilen mindestens eines Polyalkylenglykols erhältlich sind.

8. Verfahren zur Herstellung von wässrigen Dispersionen von wasserlöslichen Polymerisaten von N-Vinylcarbonsäureamiden durch radikalische Polymerisation von N-Vinylcarbonsäureamiden in wässrigem Medium in Gegenwart von Stabilisatoren, **dadurch gekennzeichnet, daß** man als Stabilisator und/oder Fällungsmittel wasserlösliche, vernetzte Pfropfpolymere einsetzt, die durch radikalisch initiierte Polymerisation von Verbindungen mit mindestens zwei ethylenisch ungesättigten Doppelbindungen in Gegenwart von Polyalkylenglykolen mit einem mittleren Molekulargewicht (zahlenmittel) im Bereich von mindestens 300 bis kleiner 500.000 erhältlich sind.

9. Verfahren nach Anspruch 8, **dadurch gekennzeichnet, daß** man N-Vinylformamid gegebenenfalls zusammen mit anderen monoethylenisch ungesättigten Monomeren in Gegenwart von Verbindungen polymerisiert, die durch Pfropfpolymerisation von (i) 0,01 bis 10 Gew.-Teilen einer mindestens zwei ethylenisch ungesättigte Doppelbindungen enthaltenden Verbindung und (ii) 0 bis 90 Gew. -Teilen mindestens eines monoethylenisch ungesättigten Monomeren in Gegenwart von 100 Gew.-Teilen mindestens eines Polyalkylenglykols erhältlich sind.

10. Verfahren nach Anspruch 8 oder 9, **dadurch gekennzeichnet, dass** man als Stabilisator Pfropfpolymerisate einsetzt, die durch Polymerisieren von N,N'-Divinylethylenharnstoff, Pentaerythrittriallylether, Methylenbisacrylamid und/oder mindestens zweifach mit Acrylsäure oder Methacrylsäure veresterten mehrwertigen Alkoholen in Gegenwart von Polyethylenglykol, Polypropylenglykol und/oder Blockcopolymerisaten aus Ethylenoxid und Propylenoxid erhältlich sind.

11. Verfahren nach einem der Ansprüche 8 bis 10, **dadurch gekennzeichnet, daß** man wässrige Dispersionen von Polymerisaten des N-Vinylformamids unter teilweiser oder vollständiger Abspaltung von Formylgruppen aus den Vinylformamideinheiten enthaltenden Polymerisaten in Vinylamineinheiten enthaltende wäßrige Dispersionen überführt.

12. Verwendung der wässrigen Dispersionen von wasserlöslichen Polymerisaten von N-Vinylcarbonsäureamiden nach den Ansprüchen 1 bis 7 als Entwässerungs-, Flockungs- und Retentionsmittel, als Nass- und Trockenfestigkeitsmittel und als Fixiermittel bei der Herstellung von Papier.

## Claims

1. An aqueous dispersion of water-soluble polymers of N-vinylcarboxamides, which comprises, as a stabilizer, water-soluble crosslinked graft polymers which are obtainable by free radical polymerization of compounds having at least two ethylenically unsaturated double bonds in the presence of polyalkylene glycols having a number average molecular weight of from at least 300 to less than 500 000.

2. The aqueous dispersion according to claim 1, wherein 100 parts by weight of the dispersion comprise (a) from 5 to 60 parts by weight of a water-soluble polymer of an N-vinylcarboxamide and (b) from 0.1 to 30 parts by weight of at least one crosslinked graft polymer.

3. The aqueous dispersion according to claim 1 or 2, wherein the polymers comprise units of N-vinylformamide, N-vinylacetamide and/or N-methyl-N-vinylacetamide and have a mean particle size of from 0.1 to 50 µm.

4. The aqueous dispersion according to any of claims 1 to 3, wherein the polymers are selected from the group consisting of the homopolymers of N-vinylformamide, the copolymers of N-vinylformamide with other monoethylenically unsaturated monomers and the polymers obtainable in each case therefrom by hydrolysis and comprising vinylamine units.

5. The aqueous dispersion according to any of claims 1 to 4, wherein the viscosity of the dispersion is from 300 to 50 000, preferably from 500 to 20 000, mPa.s (determined in a Brookfield viscometer at 20°C, spindle no.4 and 20rpm).

6. The aqueous dispersion according to any of claims 1 to 5, which comprises, as a stabilizer, water-soluble, crosslinked graft polymers which are obtainable by polymerization of from 0.01 to 10 parts by weight of a compound comprising at least two ethylenically unsaturated double bonds in the presence of 100 parts by weight of at least one polyalkylene glycol.

7. The aqueous dispersion according to any of claims 1 to 6, which comprises, as a stabilizer, water-soluble, crosslinked graft polymers which are obtainable by polymerization of (i) from 0.01 to 10 parts by weight of a compound comprising at least two ethylenically unsaturated double bonds and (ii) from 0 to 90 parts by weight of at least one monoethylenically unsaturated monomer in the presence of 100 parts by weight of at least one polyalkylene glycol.

8. A process for the preparation of aqueous dispersions of water-soluble polymers of N-vinylcarboxamides by free radical polymerization of N-vinylcarboxamides in an aqueous medium in the presence of stabilizers, wherein water-soluble, crosslinked graft polymers which are obtainable by free radical polymerization of compounds having at least two ethylenically unsaturated double bonds in the presence of polyalkylene glycols having a number average molecular weight of from at least 300 to less than 500 000 are used as the stabilizer and/or precipitating agent.

9. The process according to claim 8, wherein N-vinylformamide is polymerized, if appropriate together with other monoethylenically unsaturated monomers, in the presence of compounds which are obtainable by graft polymerization of (i) from 0.01 to 10 parts by weight of a compound comprising at least two ethylenically unsaturated double bonds and (ii) from 0 to 90 parts by weight of at least one monoethylenically unsaturated monomer in the presence of 100 parts by weight of at least one polyalkylene glycol.

10. The process according to claim 8 or 9, wherein graft polymers which are obtainable by polymerization of N,N'-divinylethyleneurea, pentaerythrityl triallyl ether, methylenebisacrylamide and/or polyhydric alcohols at least diesterified with acrylic acid or methacrylic acid in the presence of polyethylene glycol, polypropylene glycol and/or block copolymers of ethylene oxide and propylene oxide are used as the stabilizer.

11. The process according to any of claims 8 to 10, wherein aqueous dispersions of polymers of N-vinylformamide are converted into aqueous dispersions comprising vinylamine units, with elimination of some or all of the formyl groups from the polymers comprising vinylformamide units.

12. The use of the aqueous dispersions of water-soluble polymers of N-vinylcarboxamides according to any of claims 1 to 7 as drainage aids, flocculants and retention aids, as wet and dry strength agents and as fixing agents in papermaking.

## Revendications

1. Dispersions aqueuses de polymères hydrosolubles d'amides d'acides N-vinylcarboxyliques, **caractérisées en ce qu'**elles contiennent, comme stabilisateur, des polymères greffés réticulés hydrosolubles, que l'on obtient par polymérisation initiée par voie radicalaire de composés renfermant au moins deux doubles liaisons éthyléniquement insaturées en présence de polyalkylèneglycols présentant un poids moléculaire moyen (moyenne en nombre) dans la plage d'au moins 300 jusqu'à moins de 500 000.

2. Dispersions aqueuses selon la revendication 1, **caractérisées en ce** 100 parties en poids des dispersions contiennent (a) 5 à 60 parties en poids d'un polymère hydrosoluble d'un amide d'acide N-vinylcarboxylique et (b) 0,1 à 30 parties en poids d'au moins un polymère greffé réticulé.

3. Dispersions aqueuses selon la revendication 1 ou 2, **caractérisées en ce que** les polymères contiennent des unités N-vinylformamide, N-vinylacétamide et/ou N-méthyl-N-vinylacétamide, et présentent une taille de particule moyenne de 0,1 à 50 µm.

4. Dispersions aqueuses selon l'une quelconque des revendications 1 à 3, **caractérisées en ce que** les polymères sont choisis dans le groupe des homopolymères de N-vinylformamide, des copolymères de N-vinylformamide avec d'autres monomères à insaturation monoéthylénique et des polymères contenant des unités vinylamine que l'on peut obtenir, respectivement, par hydrolyse de ceux-ci.

5. Dispersions aqueuses selon l'une quelconque des revendications 1 à 4, **caractérisées en ce que** la viscosité des dispersions se situe dans la plage de 300 à 50 000 mPas, de préférence de 500 à 20 000 mPas (déterminée dans un viscosimètre Brookfield à 20°C, broche N° 4 et 20 tours/minute).

6. Dispersions aqueuses selon l'une quelconque des revendications 1 à 5, **caractérisées en ce que** les dispersions contiennent, comme stabilisateur, des polymères greffés réticulés hydrosolubles, que l'on peut obtenir par polymérisation de 0,01 à 10 parties en poids d'un composé renfermant au moins deux doubles liaisons éthyléniquement insaturées en présence de 100 parties en poids d'au moins un polyalkylèneglycol.

7. Dispersion aqueuse selon l'une quelconque des revendications 1 à 6, **caractérisée en ce que** les dispersions contiennent, comme stabilisateur, des polymères greffés réticulés hydrosolubles, que l'on peut obtenir par polymérisation de (i) 0,01 à 10 parties en poids d'un composé renfermant au moins deux doubles liaisons éthyléniquement insaturées et (ii) 0 à 90 parties en poids d'au moins un monomère monoéthyléniquement insaturé en présence de 100 parties en poids d'au moins un polyalkylèneglycol.

8. Procédé de préparation de dispersions aqueuses de polymères hydrosolubles d'amides d'acides N-vinylcarboxyliques par polymérisation par voie radicalaire d'amides d'acides N-vinylcarboxyliques en milieu aqueux en présence de stabilisateurs, **caractérisé en ce que** l'on utilise comme stabilisateur et/ou agent de précipitation des polymères greffés réticulés hydrosolubles, que l'on peut obtenir par polymérisation initiée par voie radicalaire de composés renfermant au moins deux doubles liaisons éthyléniquement insaturées en présence de polyalkylèneglycols présentant un poids moléculaire moyen (moyenne en nombre) dans la plage d'au moins 300 jusqu'à moins de 500 000.

9. Procédé selon la revendication 8, **caractérisé en ce que** du N-vinylformamide est polymérisé éventuellement conjointement avec d'autres monomères monoéthyléniquement insaturés en présence de composés que l'on peut obtenir par polymérisation par greffage de (i) 0,01 à 10 parties en poids d'un composé renfermant au moins deux doubles liaisons éthyléniquement insaturées et (ii) 0 à 90 parties en poids d'au moins un monomère monoéthyléniquement insaturé en présence de 100 parties en poids d'au moins un polyalkylèneglycol.

10. Procédé selon la revendication 8 ou 9, **caractérisé en ce que** l'on utilise, comme stabilisateur, des polymères greffés que l'on peut obtenir par polymérisation de N,N'-divinyléthylène-urée, d'éther pentaérytrithol-allylique, de méthylène bis-acrylamide et/ou d'alcools polyhydriques au moins di-estérifiés avec de l'acide acrylique ou de l'acide méthacrylique, en présence de polyéthylèneglycols, de polypropylèneglycols et/ou de copolymères séquencés d'oxyde d'éthylène et d'oxyde de propylène.

11. Procédé selon l'une quelconque des revendications 8 à 10, **caractérisé en ce que** l'on transforme des dispersions aqueuses de polymères du N-vinylformamide, moyennant le clivage partiel ou total des groupes formyle des polymères contenant des unités vinylformamide, en dispersions aqueuses contenant des unités vinylamine.

12. Utilisation des dispersions aqueuses de polymères hydrosolubles d'amides d'acides N-vinylcarboxyliques selon les revendications 1 à 7, comme agents de déshydratation, de floculation et de rétention, comme agent de résistance à l'état humide et de résistance à l'état sec et comme agent de fixation dans la fabrication du papier.
